# EUROPÄISCHE PATENTSCHRIFT

(11) **EP 1 675 231 B1**
(45) Veröffentlichungstag und Bekanntmachung des Hinweises auf die Patenterteilung: **02.05.2012**
(21) Anmeldenummer: 05110827.2
(22) Anmeldetag: 16.11.2005
(51) Int. Cl.: H02G 3/04, H02G 3/06

(54) **Kabeltragvorrichtung**
Cable support device
Dispositif porte-câble

(30) Priorität: 24.12.2004 DE 202004019942 U
(43) Veröffentlichungstag der Anmeldung: 28.06.2006
(60) Teilanmeldung: 11192159.9
(73) Patentinhaber: OBO Bettermann GmbH & Co. KG, 58710 Menden (DE)
(72) Erfinder: Jordan, Ernst-Günther, 58710 Menden (DE); Gutt, Wolfgang, 58708 Menden (DE); Schauerte, Arno, 58710 Menden (DE); Wesch, Reiner, 58730 Fröndenberg (DE)
(74) Vertreter: Haverkamp, Jens

(56) Entgegenhaltungen:
- DE-A1- 19 841 643
- US-A- 3 042 351

## Beschreibung

Die Erfindung betrifft eine Kabeltragvorrichtung aus Metall mit zwei eine Kabelaufnahme seitlich einfassenden Seitenholmen und einer die Seitenholme verbindenden Bodeneinheit, welche Kabeltragvorrichtung an ihren Enden einen Verbindungsabschnitt zum Anschließen der Kabeltragvorrichtung an eine weitere Kabeltragvorrichtung mit einem oder mehreren mechanischen Verbindungselementen sowie mit zumindest einem elektrischen Verbinderteil umfasst.

Bei derartigen Kabeltragvorrichtungen handelt es sich um Kabelrinnen, Kabelkanäle, Kabelwannen oder dergleichen, bei denen mehrere einzelne derartiger Elemente zu einem dauerhaften Kabeltrag- bzw. Kabelführungssystem zusammengesetzt werden. Eine Kabeltragvorrichtung, mit der ein Kabeltragsystem durch Zusammensetzen mehrerer derartiger Vorrichtung werkzeug- und schraubenlos erfolgt, ist aus DE 198 41 643 A1 bekannt. Diese vorbekannte Kabeltragvorrichtung weist an ihren beiden Enden jeweils einen Verbindungsabschnitt mit jeweils komplementären mechanischen Verbindungselementen auf. Der Verbindungsabschnitt dieser vorbekannten Kabeltragvorrichtung ist durch eine den Innenraum geringfügig vergrößernde Verkröpfung der Seitenholme sowie der Bodeneinheit ausgebildet, während der andere Verbindungsabschnitt unverkröpft ist. Als mechanische Verbindungselemente dienen Rast- und Riegelausnehmungen einerseits und als komplementäre Verbindungselemente Rasten und Riegel andererseits. Diese vorbekannte Kabeltragvorrichtung besteht aus Blech, so dass die Rast- und Riegelausnehmungen Ausstanzungen und die Rast- und Riegelausprägungen, umgeformte Ausklingungen, Laschen oder dergleichen sind.

In erster Linie dienen Kabeltragvorrichtungen zum Tragen von Kabeln. Die einzelnen Kabeltragvorrichtungen eines beispielsweise in einem Gebäude installierten Kabeltragsystems müssen jedoch vielfach weitere Forderungen erfüllen, die über die reine Tragfunktion einer solchen Kabeltragvorrichtung hinausgehen. Die einzelnen Kabeltragvorrichtungen eines Kabeltragsystems müssen, insbesondere wenn diese aus Metall bestehen, in einer solchen Art und Weise dauerhaft elektrisch leitend miteinander verbunden sein, dass sich zwischen aneinandergrenzenden Kabeltragvorrichtungen ein Potentialausgleich einstellen kann. Damit eine solche bestimmungsgemäße elektrische Kontaktierung bei vorbekannten Kabeltragvorrichtungen gewährleistet ist, müssen jeweils zwei aneinandergrenzende Kabeltragvorrichtungen mit Schrauben verbunden werden. Dieses ist zwar grundsätzlich möglich, hat jedoch zum Nachteil, dass dadurch die Sinnhaftigkeit schraubenloser Kabeltragvorrichtungssysteme, wie beispielsweise in DE 198 41 643 A1 offenbart, verloren geht. Zwar grenzen auch bei diesem vorbekannten Stand der Technik zwei miteinander verbundene Kabeltragvorrichtungen aus Blech im Bereich der überlappenden Verbindungsabschnitte aneinander, jedoch ist eine elektrische Kontaktierung aufgrund der notwendigen Toleranzen zum Realisieren der Rast- und Riegelverbindungen eher dem Zufall überlassen. Daher werden auch bei diesem vorbekannten Stand der Technik Schrauben eingesetzt, entweder zum zusätzlichen Schraubverbinden der Seitenholme im Bereich der überlappenden Verbindungsabschnitte oder auch durch Einsetzen eines zusätzlichen Bodenverbinders, der mit den beiden aneinandergrenzenden Böden verschraubt wird.

Eine solche zusätzliche Schraubverbindung zweier ansonsten werkzeug-und schraubenlos zu verbindender Kabeltragvorrichtungen ist vor allem dann notwendig, wenn die Kabeltragvorrichtung bzw. das aus mehreren derartiger Kabeltragvorrichtungen gebildete Kabeltragsystem eine Schutzleiterfunktion zum Ableiten von Kurzschlussströmen zukommen soll. Es ist dann in jedem Falle sicherzustellen, dass aneinandergrenzende Kabeltragvorrichtungen mit der notwendigen Kontaktfläche zum Übertragen eines solchen Kurzschlussstromes elektrisch leitend miteinander verbunden sind.

Anstelle einer direkten Schraubverbindung zweier aneinandergrenzender Kabeltragvorrichtungen werden mitunter auch Kabelbrücken eingesetzt, die typischerweise mit ihrem einen Ende durch eine Schraube an der einen Kabeltragvorrichtung und mit ihrem anderen Ende mittels einer weiteren Schraube an der anderen Kabeltragvorrichtung befestigt sind. Entsprechendes gilt, wenn Kabeltragsysteme den Anforderungen an die elektromagnetische Verträglichkeit genügen müssen.

Auch wenn mit den vorbekannten werkzeug- und schraubenlos zu verbindenden Kabeltragvorrichtungen die zwischen zwei Kabeltragvorrichtungen hergestellte Verbindung unter Umständen für die Anforderungen eines Potentialausgleichs ausreichend sein mag, ist bei diesen vorbekannten Kabeltragvorrichtungen von Nachteil, dass zum Erstellen der mitunter notwendigen elektrischen Verbindung zum Ableiten eines Kurzschlusses zweier aneinandergrenzender Kabeltragvorrichtungen zusätzliche Montageschritte zum Herstellen der notwendigen elektrischen Verbindung vorgenommen werden müssen, insbesondere solche, bei denen Werkzeuge benötigt werden, wie etwa beim Spannen von Schrauben.

Aus US 3,042,351 A ist eine gattungsgemäße Kabeltragvorrichtung bekannt. Diese Kabeltragvorrichtung trägt an den Enden der beiden Seitenholme jeweils ein Verbindungselement. Die Verbindungselemente sind komplementär zueinander konzipiert. Das Ende einer weiteren, mit dieser Kabeltragvorrichtung zu verbindenden Kabeltragvorrichtung verfügt an den Enden der Seitenholme jeweils über komplementäre Verbinderelemente. Bei dem einen Verbinderelement handelt es sich um eine den Seitenholm verlängernde Lasche mit einer rechteckförmigen Aussparung. Das komplimentäre Verbinderelement ist eine U-förmig nach außen verkröpfte, an der der Außenseite des Seitenholms angeschlossene Lasche. Die U-förmige Verkröpfung dient zum Eingreifen in die rechteckförmige Ausnehmung des komplementären Verbinderelementes. Im Unterschied zu der aus DE 198 41 643 A1 bekannt gewordenen Kabeltragvorrichtung sind die aus US 3,042,351 A bekannt gewordenen Kabeltragvorrichtungen auf Stoß und nicht überlappend zur Ausbildung eines Kabeltragsystem miteinander verbunden. Zum Sichern der miteinander in Eingriff gestellten Verbindungselemente bei den Kabeltragvorrichtungen gemäß US 3,042,351 A dient ein Riegel, der in die Ausnehmung der ein Verbindungselement durchgreifenden U-förmigen Verkröpfung des anderen Verbindungselementes eingesetzt wird. Bei geeigneter Ausbildung der aneinander liegenden Flächen der beiden komplementären Verbindungselemente liegen diese aneinander an, sodass auf diese Weise eine elektrische Verbindung zwischen zwei angrenzenden Kabeltragvorrichtungen hergestellt ist. Zum Verbinden zweiter Kabeltragvorrichtungen gemäß diesem Stand der Technik ist es erforderlich, die die Seitenholme verlängertenden Laschen als die einen Verbindungselemente nach außen aufzubiegen, beide Kabeltragvorrichtungen aneinander zu führen bis das die nach außen ausgestellten U-förmigen Verkröpfungen in die rechteckförmigen Ausnehmungen einspringen. Eine solche Montage ist umständlich und nachteilig, wenn eine definierte elektrische Kontaktierung der miteinander verbundenen Kabeltragvorrichtungen hergestellt sein soll.

Ausgehend von diesem diskutierten Stand der Technik liegt der Erfindung daher die Aufgabe zugrunde, eine gattungsgemäße Kabeltragvorrichtung der eingangs genannten Art dergestalt weiterzubilden, dass diese werkzeug- und schraubenlos in einem Montagevorgang mit einer weiteren Kabeltragvorrichtung verbindbar ist und beim Verbinden der beiden Kabeltragvorrichtungen sich sowohl eine mechanische als auch eine definierte, den Anforderungen entsprechende elektrische Verbindung einstellt.

Diese Aufgabe wird erfindungsgemäß durch eine eingangs genannte Kabeltragvorrichtung gelöst, bei der der Verbindungsabschnitt durch eine die Querschnittsfläche der Kabelaufnahme vergrößernde oder verkleinernde Verkröpfung der Seitenholme und der Bodeneinheit gebildet ist und dadurch die Kabeltragvorrichtung mit ihrem einen Ende überlappend an den Verbindungsabschnitt mit dem oder den komplementären mechanischen Verbindungselementen der weiteren Kabeltragvorrichtung zum Ausbilden eines Kabeltragsystems werkzeug- und schraubenlos verbindbar ist, wobei die Kabeltragvorrichtung im Bereich ihrer Verbindungsabschnitte als gegenständlicher Teil derselben ein oder mehrere elektrische Steckverbinderteile trägt, die mit komplementären Steckverbinderteilen des Verbindungsabschnitts der weiteren Kabeltragvorrichtung zum Erstellen eines oder mehrerer, die beiden Kabeltragvorrichtungen elektrisch miteinander verbindenden Steckverbindern mit dauerhaft definierter elektrischer Kontaktfläche und definiertem Kontaktdruck zusammensteckbar sind, wobei als elektrische Steckverbinderteile zum Erstellen eines elektrischen Steckverbinders ein Flachstecker und eine Flachsteckerbuchse, etwa ein Steckerschuh vorgesehen sind und wobei zwei komplementäre Steckverbinderteile beim Zusammensetzen von zwei Kabeltragvorrichtungen einen elektrischen Steckverbinder ausbilden.

Diese Kabeltragvorrichtung verfügt im Bereich ihrer Verbindungsabschnitte über ein oder mehrere Steckverbindungsteile zum Erstellen eines oder mehrerer elektrischer Steckverbinder, wenn diese Kabeltragvorrichtung zum Erstellen eines Kabeltragsystems mit einer weiteren Kabeltragvorrichtung verbunden wird. Die elektrischen Steckverbinderteile dienen zum Herstellen jeweils eines elektrischen Steckverbinders zwischen zwei aneinandergrenzenden und elektrisch zu kontaktierenden Kabeltragvorrichtung, wobei durch den zumindest einen elektrischen Steckverbinder eine elektrische Verbindung mit dauerhaft definierter Kontaktfläche und definierten Kontaktdruck beim Verbinden zweier Kabeltragvorrichtungen erstellt wird. Die elektrischen Steckverbinderteile von zwei zu verbindenden Kabeltragvorrichtungen sind jeweils komplementär ausgebildet, und zwar in einer Art und Weise, dass die elektrische Verbindung unmittelbar beim Zusammensetzen der beiden Kabeltragvorrichtungen zusammengefügt werden. Als elektrische Steckverbinderteile können beispielsweise Flachstecker und komplementär dazu Flachsteckeraufnahmen, beispielsweise Steckerschuhe vorgesehen sein. Die Steckverbinderteile sind zweckmäßigerweise gegenständlicher Teil der Kabeltragvorrichtung, wobei ein Flachstecker beispielsweise durch eine entsprechende Ausstanzung in einem Verbindungsabschnitt im Bereich seines oberen Randes eines Seitenholmes gebildet werden kann. Eine als Steckerschuh ausgebildete Flachsteckeraufnahme lässt sich durch Ausbilden von zwei Ausklinkungen eines Seitenholmes und entsprechendes Umformen der ausgeklinkten Laschen ausbilden, so dass auf diese Weise zwei parallel zueinander verlaufende Anpresswülste gebildet werden. Die Anpresswülste stehen bei eingestecktem Flachstecker der anderen Kabeltragvorrichtung mit ihrer Stirnseite auf der Oberfläche des Flachsteckers auf. Der Flachstecker selbst liegt mit seiner Rückseite an einem Bereich des Verbindungsabschnittes der anderen Kabeltragvorrichtung an und wird an diesem Kontaktierungsbereich durch die Anpresswülste gedrückt. Eine elektrische Verbindung ist sodann über die Stirnflächen der Anpresswülste und den Bereich, an dem der Flachstecker anliegt, definiert. Derartige oder ähnliche Steckverbinderteile lassen sich ohne weiteres aus der Kabeltragvorrichtung aus Blech selbst herstellen. Der Kontaktdruck der verbundenen Steckverbinderteile resultiert bei einer solchen Ausgestaltung aus der Materialelastizität der Steckeraufnahme, bzw. den Anpresswülsten. Grundsätzlich ist es ebenfalls möglich, eine Steckeraufnahme, beispielsweise eine Flachsteckeraufnahme zu konzipieren, die ein Federelement umfasst, das zweckmäßigerweise vor dem Verbinden zweier Kabeltragvorrichtungen an dem hierfür vorgesehenen Verbindungsabschnitt angebracht ist. Typischerweise wird man ein solches Federelement bereits bei der Herstellung an der Kabeltragvorrichtung ansetzen.

Gemäß einer bevorzugten Ausgestaltung ist die Kabeltragvorrichtung mit zwei komplementären Verbindungsabschnitten an ihren jeweiligen Enden ausgestattet. Beispielsweise kann es sich bei dem einen Verbindungsabschnitt um eine die Querschnittsfläche der Kabelaufnahme vergrößernde Verkröpfung der Seitenholme sowie der Bodeneinheit handeln, in welche Verkröpfung der nicht verkröpfte Verbindungsabschnitt der weiteren Kabeltragvorrichtung einsetzbar ist. Anstelle einer solchen, die Kabelaufnahme vergrößernden Verkröpfung kann neben anderen Möglichkeiten zur Ausbildung eines Verbindungsabschnittes auch vorgesehen sein, die Verkröpfung der Seitenholme und der Bodeneinheit unter einer Reduzierung der Querschnittsfläche der Kabelaufnahme auszubilden.

Die miteinander zusammensteckbaren Steckverbinderteile zur Ausbildung eines Steckverbinders können gleichfalls dem Zweck dienen, die zusammengesetzten Kabeltragvorrichtungen in einem ihrer Freiheitsgrade zu fixieren. Der durch einen solchen Steckverbinder mechanisch zu fixierende Freiheitsgrad der beiden aneinandergrenzenden Kabeltragvorrichtungen verläuft regelmäßig entlang einer Achse quer zur Richtung des aufgebrachten Kontaktdruckes, so dass unabhängig von den Toleranzen in jedem Fall der für die gewünschte elektrische Verbindung benötigte Kontaktdruck unverändert bleibt.

Die Ausrichtung der elektrischen Steckverbinderteile zweier komplementärer Verbindungsabschnitte ist typischerweise dergestalt konzipiert, dass ein Zusammensetzen von zwei Kabeltragvorrichtungen gleichfalls zur Ausbildung des Steckverbinders führt. Dieses lässt sich bei Kabeltragvorrichtungen realisieren, deren mechanische Verbindungselemente durch eine Montagebewegung parallel zum Längsverlauf der Kabeltragvorrichtungen oder auch durch eine Montagebewegung quer zum Längsverlauf der Kabeltragvorrichtungen zusammengesetzt werden. Letzteres hat zum Vorteil, dass eine Montage oder auch eine spätere Demontage zum Austauschen einer einzelnen Kabeltragvorrichtung aus einem Kabeltragsystem ohne eine Längenänderung innerhalb des Kabeltragsystems vorgenommen werden kann. In einem solchen Fall wird man die elektrischen Steckverbinderteile im Bereich der Seitenholme der Verbindungsabschnitte anordnen.

Nachfolgend ist die Erfindung anhand von Ausführungsbeispielen unter Bezugnahme auf die beigefügten Figuren beschrieben. Es zeigen:
- **Fig. 1**:: eine schematisierte perspektivische Ansicht schräg von unten auf zwei miteinander zu verbindende Kabeltragvorrichtungen,
- **Fig. 2**:: eine perspektivische Ansicht von oben auf die beiden miteinander verbundenen Kabeltragvorrichtungen der Figur 1,
- **Fig. 3:**: eine vergrößerte Darstellung des Bereiches der Verbindung der beiden Kabeltragvorrichtungen der Figur 2 in einer Seitenansicht,
- **Fig. 4:**: eine vergrößerte Darstellung des Bereiches der Verbindung der beiden Kabeltragvorrichtungen der Figur 2 in einer Draufsicht,
- **Fig. 5:**: eine perspektivische Teildarstellung zweier miteinander zu verbindender Kabeltragvorrichtungen gemäß einer weiteren Ausgestaltung,
- **Fig. 6:**: eine vergrößerte Darstellung des Bereiches der Verbindung der beiden Kabeltragvorrichtungen der Figur 5 in einer zum Teil geschnittenen Draufsicht,
- **Fig. 7:**: eine schematisierte Seitenansicht von zwei weiteren, miteinander verbundenen Kabeltragvorrichtungen,
- **Fig. 8:**: eine vergrößerte Darstellung des Bereiches der Verbindung der beiden Kabeltragvorrichtungen der Figur 7 in einer zum Teil geschnittenen Draufsicht,
- **Fig. 9:**: eine schematisierte perspektivische Ansicht schräg von unten auf zwei miteinander zu verbindende Kabeltragvorrichtungen gemäß der zur Figur 5 gezeigten Art mit jeweils einem Deckel und
- **Fig. 10:**: die Kabeltragvorrichtung der Figur 9 mit den die einzelnen Vor- richtungen verschließenden Deckeln.

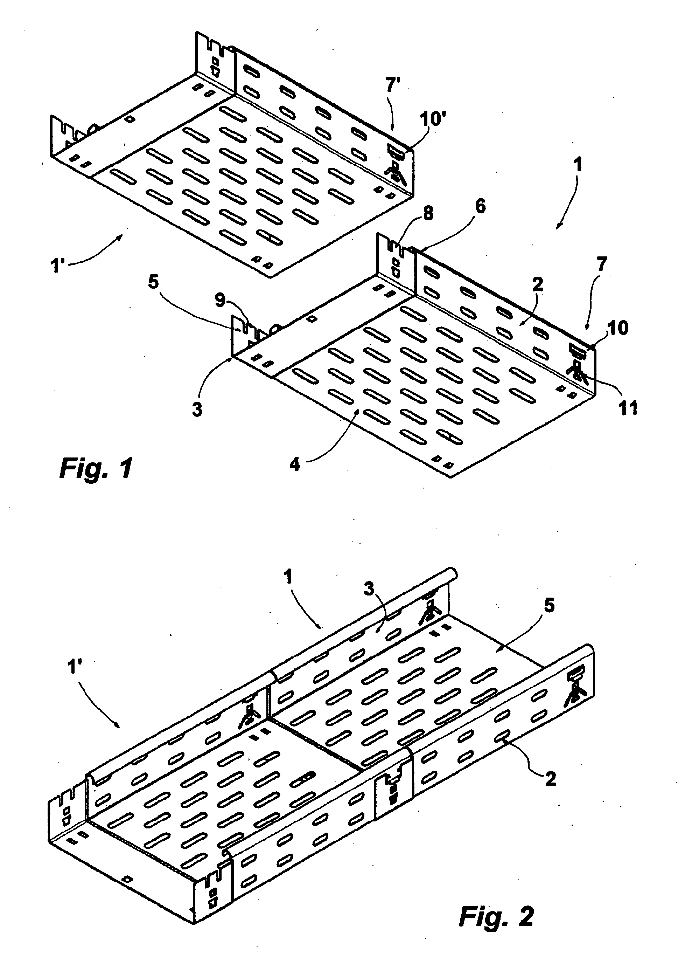

Eine Kabeltragvorrichtung 1 besteht aus Blech und weist zwei Seitenholme 2, 3 sowie eine die Seitenholme 2, 3 verbindende Bodeneinheit 4 auf. Durch die Seitenholme 2, 3 und die Bodeneinheit 4 wird eine Kabelaufnahme 5 gebildet. Die Kabeltragvorrichtung 1 verfügt an ihren beiden Enden jeweils über einen Verbindungsabschnitt 6, 7, mit dem die Kabeltragvorrichtung 1 mit einer oder mehreren weiteren, gleichartig aufgebauten Kabeltragvorrichtung 1' verbindbar ist. Der Verbindungsabschnitt 6 ist durch eine die Querschnittsfläche der Kabelaufnahme 5 vergrößernde Verkröpfung der Seitenholme 2, 3 sowie der Bodeneinheit 4 gebildet. Der Verbindungsabschnitt 7 ist dagegen unverkröpft. Der Verbindungsabschnitt 6 dient zur Aufnahme des unverkröpften Verbindungsabschnittes 7', der weiteren Kabeltrageinheit 1'. Die Verbindungsabschnitte 6, 7 der Kabeltrageinheit 1 sind komplementär zueinander ausgebildet. Die Verbindungsabschnitte 6, 7 tragen jeweils mechanisch wirkende Rast- und Riegelelemente zum mechanischen Fixieren zweier zusammengesetzter Kabeltragvorrichtungen 1, 1'. Die mechanischen Verbindungselemente sind dergestalt ausgelegt, dass die beiden Kabeltragvorrichtungen 1, 1' werkzeug- und schraubenlos miteinander verbunden werden können, und zwar in einer Richtung quer zum Längsverlauf der jeweiligen Kabeltragvorrichtung 1 bzw. 1'. Bei dem in Figur 1 dargestellten Ausführungsbeispiel werden die beiden Kabeltragvorrichtungen 1, 1' dadurch miteinander mechanisch verbunden, dass die Kabeltragvorrichtung 1' mit ihrem Verbindungsabschnitt 7' in den Verbindungsabschnitt 6 der Kabeltragvorrichtung 1 von oben eingeschoben wird.

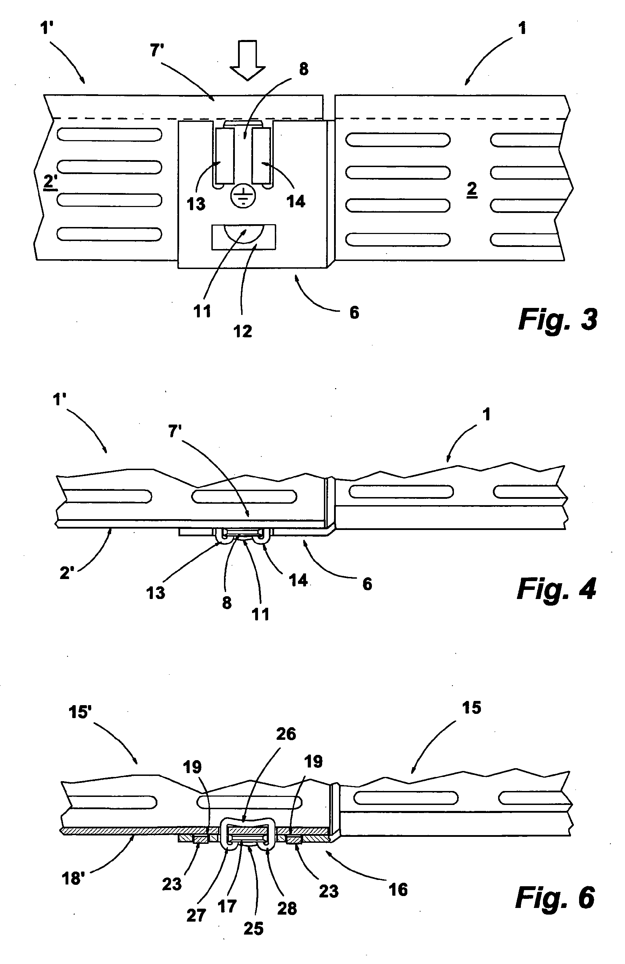

Die mechanischen Verbindungselemente der Kabeltragvorrichtung 1, 1' sind weiter unten zu den Figuren 3 und 4 beschrieben.

Neben den mechanischen Verbindungselementen tragen die Verbindungsabschnitte 6, 7 gleichfalls Steckverbinderteile, damit beim Zusammenfügen der beiden Kabeltragvorrichtungen 1,1' zwischen den beiden Kabeltragvorrichtungen 1,1' eine definierte elektrische Verbindung hergestellt wird. Diesem Zweck dienen die jeweils komplementären Steckverbinderteile der Verbindungsabschnitte zweier zu verbindender Kabeltragvorrichtungen 1, 1', die beim Zusammensetzen der beiden Kabeltragvorrichtungen 1, 1' einen oder auch mehrere elektrische Steckverbinder ausbilden. Zu diesem Zweck trägt der Verbindungsabschnitt 6 im Bereich des oberen Randes der Seitenholme 2, 3 jeweils einen Flachstecker 8, 9, der durch zwei vertikal verlaufende Ausstanzungen gebildet wird. Als komplementäres Steckverbinderteil umfasst der Verbindungsabschnitt 7 im Bereich der Seitenholme 2, 3 jeweils einen nach unten offenen Steckerschuh 10, der angeordnet ist, damit beim Zusammensetzen zweier Kabeltragvorrichtungen 1, 1' die Flachstecker 8 bzw. 9 jeweils in einen Steckerschuh 10 eingeführt werden. Die elektrischen Steckverbinderteile sind ausführlicher zu den Detaildarstellungen der Figuren 3 und 4 beschrieben.

Figur 2 zeigt die beiden miteinander verbundenen Kabeltragvorrichtungen 1, 1', die werkzeug- und schraubenlos miteinander verbunden und in der in Figur 2 gezeigten Anordnung mechanisch zueinander fixiert sind. Durch Einführen der Flachstecker 8, 9 in die Steckerschuhe 10' des Verbindungsabschnitts 7' der Kabeltragvorrichtung 1' sind die beiden Kabeltragvorrichtungen 1, 1' zudem durch zwei Steckverbinder elektrisch miteinander verbunden, wobei jedem Steckverbinder eine definierte elektrische Kontaktfläche sowie ein definierter Kontaktdruck zu eigen ist.

Figur 3 zeigt in einer detaillierteren Seitenansicht den mit dem Verbindungsabschnitt 7' der Kabeltragvorrichtung 1' verbindenden Verbindungsabschnitt 6 der Kabeltragvorrichtung 1. Der Verbindungsabschnitt 7' ist in den verkröpften Verbindungsabschnitt 6 der Kabeltragvorrichtung 1 eingesetzt. Die Einsetzbewegung erfolgte in einer Richtung quer zur Längserstreckung der Kabeltragvorrichtungen 1 bzw. 1', wie dieses durch den Pfeil in Figur 3 angedeutet ist. Zum mechanischen Fixieren der beiden Kabeltragvorrichtungen 1, 1' in ihrer in Figur 3 gezeigten Anordnung dient zum einen eine an dem Verbindungsabschnitt 7' der Kabeltragvorrichtung 1' befindliche Raste 11. Die Raste 11 ist eine nach außen gerichtete Ausprägung des Seitenholms 2' im Bereich des Verbindungsabschnittes 7'. Die Raste 11 weist eine gerade Oberseite und einen nach unten zur Oberfläche des Seitenholms 2' hin gewölbten unteren Abschnitt auf. Daher dient der untere Abschnitt der Raste 11 als Auflauffläche. Die Raste 11 greift in ein Rastfenster 12 des Verbindungsabschnittes 6 der Kabeltragvorrichtung 1 ein und liegt mit ihrer geraden Oberseite an der oberen Begrenzung des Rastfensters 12 an. Durch diese Maßnahme ist die Kabeltragvorrichtung 1' gegenüber einem Herausziehen aus dem Verbindungsabschnitt 6 entgegen der Zusammensetzbewegung gesichert. Gelöst werden kann diese Fixierung durch Eindrücken der Raste 11, etwa mittels eines Schraubendrehers oder dergleichen.

Der an dem Verbindungsabschnitt 6 der Kabeltragvorrichtung 1 angeformte Flachstecker 8 ist oberseitig angeschrägt, wie dieses für Flachstecker üblich ist. Der Steckerschuh 10' des Verbindungsabschnitts 7' der Kabeltragvorrichtung 1' ist bei dem dargestellten Ausführungsbeispiel durch zwei aus dem Seitenholm 2' ausgeklinkte und anschließend umgeformte Laschen gebildet, die zwei Anpresswulste 13, 14 bilden, wie dieses sich aus der Draufsicht der aus den Kabeltragvorrichtungen 1, 1' gebildeten Anordnung gemäß Figur 4 ergibt. Die Anpresswülste 13, 14 weisen eine Umbiegung um etwa 180° auf, so dass diese mit ihren blanken Stirnflächen auf der nach au ßen weisenden Oberfläche des Flachsteckers 8 aufliegen. Die Anpresswülste 13, 14 sind vor einem Einführen des Flachsteckers 8 mit ihrer blanken Stirnfläche in einem Abstand zur Oberfläche des Seitenholms 2' angeordnet, der kleiner ist als die Materialstärke des Flachsteckers 8. Beim Einführen des Flachsteckers 8 in den Steckerschuh 10' werden sodann die Anpresswülste 13, 14 aufgeweitet, so dass ihre blanken Stirnflächen unter Vorspannung an dem Flachstecker 8 anliegen und diesen mit seiner gegenüberliegenden Oberseite an den Seitenholm 2' andrücken. Auf diese Weise ist durch den Flachstecker 8 als das eine Steckverbinderteil und den Steckerschuh 10' als das andere Steckverbinderteil ein elektrischer Steckverbinder mit definierter elektrischer Kontaktfläche und mit einem definierten Kontaktdruck gebildet. Die Kontaktierung der beiden Kabeltragvorrichtungen 1, 1' an ihren Holmen 3 bzw. 3' erfolgt in gleicher Art und Weise.

Bei dem dargestellten Ausführungsbeispiel dienen die Anpresswülste 13, 14 und der darin eingeführte Flachstecker 8 gleichfalls einer mechanischen Fixierung der beiden Kabeltragvorrichtungen 1, 1' in Richtung ihrer Längsachsen. Eine Bewegung der beiden Kabeltragvorrichtungen 1, 1' in dieser Richtung ist durch Anschlagen der vertikalen Schmalseiten des Flachsteckers 8 an dem Anpresswulst 13 bzw. 14 verhindert. Somit übernehmen die beschriebenen Steckverbinder an den Seitenholmen 2, 3 der jeweiligen Verbindungsabschnitte bei diesem Ausführungsbeispiel ebenfalls eine mechanische Fixierungsfunktion. Festzuhalten ist, dass die mechanische Fixierungsfunktion des Steckverbinders entlang einem Freiheitsgrad erfolgt, dessen Achse quer zur Achse des durch die Anpresswülste 13, 14 aufgebrachten Kontaktdruckes erfolgt. Daher hat eine Bewegung des Flachsteckers 8 innerhalb der durch den Abstand der Anpresswülste 13, 14 definierten Aufnahme des Steckerschuhs 10' keinerlei Auswirkungen auf die Qualität der erstellten elektrischen Verbindung zwischen den beiden Kabeltragvorrichtungen 1, 1'.

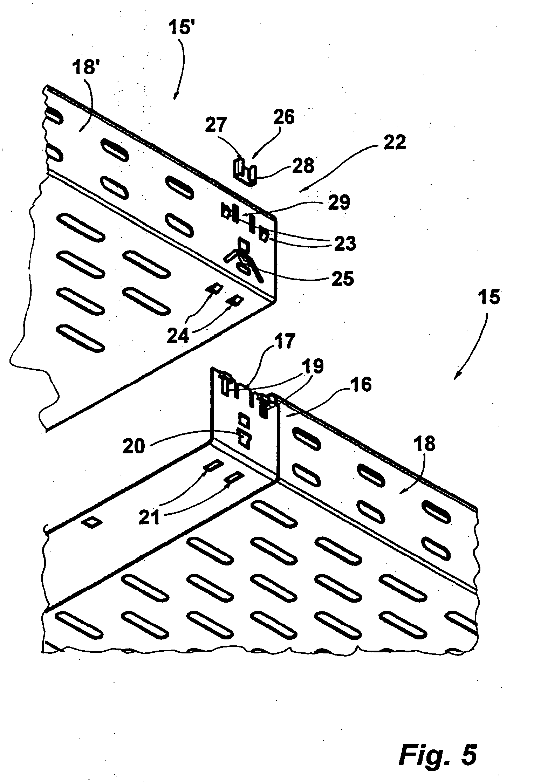

Figur 5 zeigt in einem Ausschnitt zwei weitere Kabeltragvorrichtungen 15, 15', die grundsätzlich aufgebaut sind wie die beiden vorbeschriebenen Kabeltragvorrichtungen 1, 1'. Im Unterschied zu den Kabeltragvorrichtungen 1, 1' weisen die Kabeltragvorrichtungen 15, 15' voneinander getrennte mechanische Verbindungselemente und elektrische Steckverbinderteile auf. Der eine Verbindungsabschnitt 16 der Kabeltragvorrichtung 15 ist ebenso wie der Verbindungsabschnitt 6 der Kabeltragvorrichtung 1 verkröpft ausgebildet. Der Verbindungsabschnitt 16 trägt als elektrisches Steckverbindungsteil einen Flachstecker 17, der ebenfalls durch Ausstanzungen aus dem Seitenholm 18 im Bereich des Verbindungsabschnittes 16 gebildet ist. Als mechanische Verbindungselemente trägt der Verbindungsabschnitt 16 mehrere Aussparungen 19, 20, 21 zur Aufnahme einer Raste und zur Aufnahme von Riegeln zum mechanischen Fixieren der beiden Kabeltragvorrichtungen 15, 15'. Der komplementäre und in Figur 5 nicht dargestellte Verbindungsabschnitt zu der Kabeltragvorrichtung 15 ist anhand des identisch aufgebauten Verbindungsabschnittes der Kabeltragvorrichtung 15' erkennbar. Dieser Verbindungsabschnitt ist insgesamt mit dem Bezugszeichen 22 gekennzeichnet. Der Verbindungsabschnitt 22 trägt sowohl an seinem Seitenholm 18' sowie unterseitig mehrere Riegel 23, 24, die zum Eingreifen in die Aussparungen 19, 21 vorgesehen sind. Des Weiteren trägt der Verbindungsabschnitt 22 eine Raste 25 zum Eingreifen in die Aussparung 20, die in diesem Fall als Rastaussparung dient. Als elektrisches Steckverbinderteil ist dem Verbindungsabschnitt 22 der Kabeltragvorrichtung 15' ein klammerartiges Federelement zugeordnet, das mit seinen beiden, jeweils einen Anpresswulst 27, 28 tragenden Schenkeln in zwei in den Seitenholm 18' eingebrachte Schlitze eingesetzt und darin gehalten ist. Der zwischen den Schlitzen befindliche Bereich 29 dient bei dem dargestellten Ausführungsbeispiel als Andruck- und Kontaktfläche.

Die Kabeltragvorrichtungen 15, 15' werden ebenfalls quer zu ihrer Längserstreckung zusammengesetzt, so dass der Verbindungsabschnitt 22 der Kabeltragvorrichtung 15 in den Verbindungsabschnitt 16 der Kabeltragvorrichtung 15' eingesetzt wird. Bei diesem Verbindungsvorgang werden die ausgeprägten Riegel 23 in die Aussparungen 19 des Verbindungsabschnittes 16 eingeschoben. Entsprechendes gilt für die Riegel 24, die in die Aussparungen 21 eingeführt werden. Die Raste 25 wird in die Aussparung 20 eingebracht. Durch die zusammengebrachten mechanischen Verbindungselemente sind die beiden Kabeltragvorrichtungen 15, 15' mechanisch zueinander fixiert. Beim Zusammenführen der beiden Kabeltragvorrichtungen 15, 15' wird des Weiteren der Flachstecker 17 in den durch die Anpresswülste 27, 28 des Federelemente 26 gebildete Flachsteckeraufnahme eingeführt. Das Federelement 26 stützt sich mit seinem zur Innenseite des Holms 18' eingebogenen Rücken an der Innenseite des Seitenholms 18' ab und ist dergestalt konzipiert, dass in der in Figur 6 gezeigten, zum Teil geschnittenen Darstellung der zusammengeführten Kabeltragvorrichtungen 15, 15' der Flachstecker 17 mit seiner Rückseite an dem Bereich 29 des Seitenholms 18' der Kabeltragvorrichtung 15' unter Vorspannung anliegt. Eine elektrische Kontaktierung erfolgt des Weiteren über das Federelement 26 selbst. Der Abstand der Stirnseiten der Anpresswülste 27, 28 von der Außenseite des Holms 18' der Kabeltragvorrichtung 15' ist kleiner als die Stärke des Flachsteckers 17. Somit ist zwischen den beiden Kabeltragvorrichtungen 15, 15' neben einer wirksamen mechanischen Fixierung ebenfalls eine definierte elektrische Verbindung durch Ausbilden eines Steckverbinders erstellt. Bei dem in den Figuren 5 und 6 dargestellten Ausführungsbeispiel wird der Steckverbinder durch den Flachstecker 17, das Federelement 26 und den Kontaktbereich 29 gebildet.

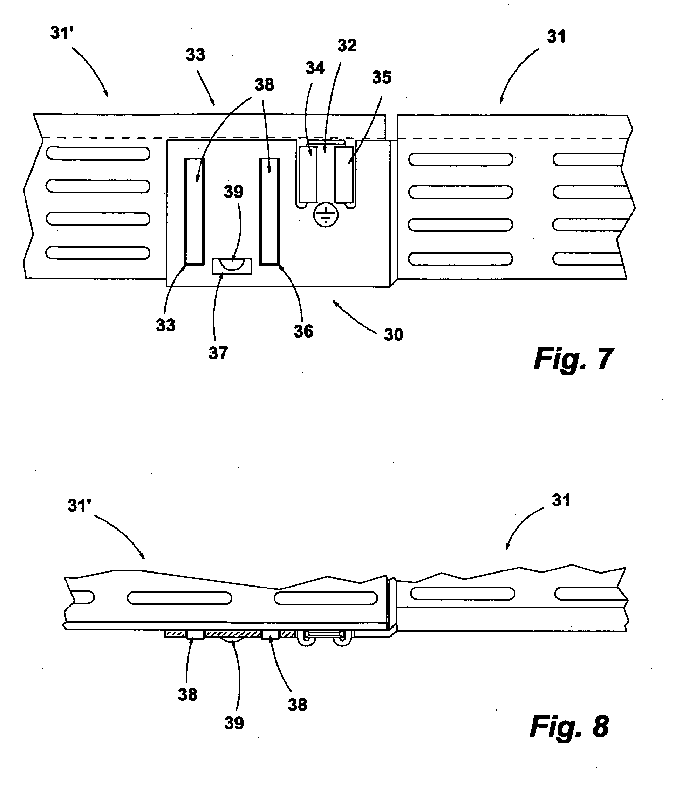

Figuren 7 und 8 zeigen ein weiteres Ausführungsbeispiel, bei dem die mechanischen Verbindungselemente im Unterschied zu der in den Figuren 1 bis 4 gezeigten Ausgestaltung von den elektrischen Steckverbinderteilen getrennt sind. Der Verbindungsabschnitt 30 der einen Kabeltragvorrichtung 31 trägt als elektrisches Steckverbindungsteil einen Flachstecker 32, während der komplementäre Verbindungsabschnitt 33 der weiteren Kabeltragvorrichtung 31' ausgeklinkte und umgeformte Laschen 34, 35 trägt, wie diese zu den Ausführungsbeispielen der Figuren 1 bis 4 beschrieben sind. Als mechanische Verbindungs- und Fixierelemente dienen bei dem Ausführungsbeispiel der Figuren 7 und 8 in den Verbindungsabschnitt 30 eingebrachte Riegelaussparungen 36 sowie eine Rastaussparung 37. Der Verbindungsabschnitt 33 trägt die komplementären mechanischen Verbindungselemente, bei denen es sich um Riegel 38 und um eine Raste 39 handelt. Die Figuren 7 und 8 zeigen die miteinander verbundenen Kabeltragvorrichtungen 31, 31'.

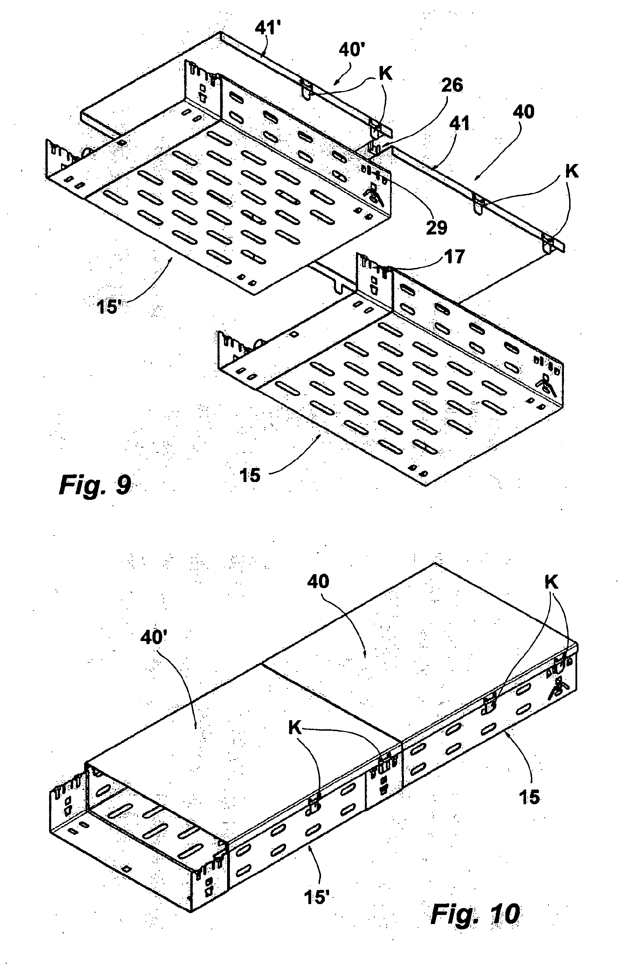

Figur 9 zeigt die Kabeltragvorrichtungen 15, 15', wie diese zu Figur 5 beschrieben sind und somit über sämtliche zu Figur 5 beschriebene Merkmale aufweisen. Zusätzlich ist den in Figur 9 gezeigten Kabeltragvorrichtungen 15, 15' jeweils ein Deckel 40, 40' zugeordnet, mit dem jeweils eine Kabeltragvorrichtung 15 bzw. 15' oberseitig verschlossen werden kann. Bei den Deckeln 40, 40' handelt es sich um U-förmig abgekantete Blechteile. Der Deckel 40 und entsprechend auch der Deckel 40' tragen an ihren nach unten weisenden Schenkeln 41, 41' Kontaktstifte K, die dauerhaft elektrisch leitend mit den Schenkeln 41 des jeweiligen Deckels 40 bzw. 40' klemmend verbunden sind. Die Kontaktstifte K dienen zum Herstellen einer elektrischen Verbindung zwischen dem jeweiligen Deckel 40 bzw. 40' und der dazugehörigen Kabeltragvorrichtung 15 bzw. 15'. Zu diesem Zweck greifen eine oder mehrere Kontaktstifte K in den zum Herstellen der dauerhaft elektrisch leitenden Verbindung zwischen den beiden Kabeltragvorrichtungen 15, 15' gebildeten Steckverbinder ein. Zu diesem Zweck ist das Federelement 26 entsprechend ausgestaltet, damit von diesem, nicht nur der elektrische Kontaktbereich 29 der Kabeltragvorrichtung 15' und der Flachstecker 17 der Kabeltragvorrichtung 15 sondern auch die Kontaktzunge eines Kontaktstiftes K aufgenommen werden kann und somit eine dauerhafte elektrische Verbindung mit definierter elektrischer Kontaktfläche zwischen allen drei Elementen hergestellt ist.

Auf diese Weise ist es ohne weiteres möglich, den oder die Deckel einer Kabeltragvorrichtung und einem daraus gebildeten dauerhaften Kabelführungssystem den elektrischen Anforderungen entsprechend in das System mit einzubinden.

Diejenigen Kontaktstifte K, die nicht zum Eingreifen in ein Federelement 26 vorgesehen sind, können in Ausnehmungen der Seitenholme der Kabeltragvorrichtungen 15 bzw. 15' eingesetzt werden, wie dieses in Figur 10 anhand der mit den Deckeln 40, 40' geschlossenen Kabeltragvorrichtungen 15, 15' erkennbar ist.

### Bezugszeichenliste

- 1, 1': Kabeltragvorrichtung
- 2: Seitenholm
- 3: Seitenholm
- 4: Bodeneinheit
- 5: Kabelaufnahme
- 6: Verbindungsabschnitt
- 7: Verbindungsabschnitt
- 8: Flachstecker
- 9: Flachstecker
- 10, 10': Steckerschuh
- 11: Raste
- 12: Rastfenster
- 13: Anpresswulst
- 14: Anpresswulst
- 15, 15': Kabeltragvorrichtung
- 16: Verbindungsabschnitt
- 17: Flachstecker
- 18: Seitenholm
- 19: Aussparung
- 20: Aussparung
- 21: Aussparung
- 22: Riegelabschnitt
- 23: Riegel
- 24: Riegel
- 25: Raste
- 26: Federelement
- 27: Anpresswulst
- 28: Anpresswulst
- 29: elektrischer Kontaktbereich
- 30: Verbindungsabschnitt
- 31, 31': Kabeltragvorrichtung
- 32: Flachstecker
- 33: Verbindungsabschnitt
- 34: Lasche
- 35: Lasche
- 36: Riegelaussparung
- 37: Rastaussparung
- 38: Riegel
- 39: Raste
- 40, 40': Deckel
- 41,41': Schenkel
- K: Kontaktstift

## Patentansprüche

1. Kabeltragvorrichtung (1) aus Metall mit zwei eine Kabelaufnahme (5) seitlich einfassenden Seitenholmen (2, 3; 18, 18') und einer die Seitenholme (2, 3) verbindenden Bodeneinheit (4), welche Kabeltragvorrichtung (1, 15, 31) an ihren Enden einen Verbindungsabschnitt (6, 7; 16, 22; 30, 33) zum Anschließen der Kabeltragvorrichtung (1, 15, 31) an eine weitere Kabeltragvorrichtung (1', 15', 31') mit einem oder mehreren mechanischen Verbindungselementen (11, 12; 19, 20, 21; 36, 37) sowie mit zumindest einem elektrischen Verbinderteil (8, 9; 17; 32) umfasst, **dadurch gekennzeichnet, dass** der Verbindungsabschnitt (6, 7; 16, 22; 30, 33) durch eine die Querschnittsfläche der Kabelaufnahme (5) vergrößernde oder verkleinernde Verkröpfung der Seitenholme (2,3; 18, 18') und der Bodeneinheit (4) gebildet ist und dadurch die Kabeltragvorrichtung (1, 15, 31) mit ihrem einen Ende überlappend an den Verbindungsabschnitt (6, 7; 16, 22; 30, 33) mit dem oder den komplementären mechanischen Verbindungselementen (10, 10'; 23, 24, 25; 37, 38) der weiteren Kabeltragvorrichtung (1', 15', 31') zum Ausbilden eines Kabeltragsystems werkzeug- und schraubenlos verbindbar ist, wobei die Kabeltragvorrichtung (1, 15, 31) im Bereich ihrer Verbindungsabschnitte (6, 7; 16, 22; 30, 33) als gegenständlicher Teil derselben ein oder mehrere elektrische Steckverbinderteile (8, 9; 17; 32) trägt, die mit komplementären Steckverbinderteilen (13, 14; 26; 34, 35) des Verbindungsabschnitts (7', 22, 33) der weiteren Kabeltragvorrichtung (1', 15', 31') zum Erstellen eines oder mehrerer, die beiden Kabeltragvorrichtungen (1, 1'; 15, 15'; 31, 31') elektrisch miteinander verbindenden Steckverbindern mit dauerhaft definierter elektrischer Kontaktfläche und definiertem Kontaktdruck zusammensteckbar sind, wobei als elektrische Steckverbinderteile zum Erstellen eines elektrischen Steckverbinders ein Flachstecker (8, 9; 17; 32) und eine Flachsteckerbuchse, etwa ein Steckerschuh vorgesehen sind und wobei zwei komplementäre Steckverbinderteile (8, 9; 17; 32) beim Zusammensetzen von zwei Kabeltragvorrichtungen (1,1') einen elektrischen Steckverbinder ausbilden.

2. Kabeltragvorrichtung nach Anspruch 1, **dadurch gekennzeichnet, dass** die Kabeltragvorrichtung (1, 1'; 15, 15'; 31, 31') an ihren beiden Enden einen Verbindungsabschnitt (6, 7; 16, 22; 30, 33) mit jeweils komplementären mechanischen Verbindungselementen (11, 12; 19, 20, 21, 23, 24, 25; 36, 37, 38, 39) und komplementären elektrischen Steckverbinderteilen (8, 9, 13, 14; 17, 26; 34, 35) aufweist.

3. Kabeltragvorrichtung nach Anspruch 2, **dadurch gekennzeichnet, dass** die Steckverbinderteile (8, 9, 13, 14; 17; 32) Teil einer aus Blech bestehenden Kabeltragvorrichtung sind.

4. Kabeltragvorrichtung nach Anspruch 3, **dadurch gekennzeichnet, dass** eine Flachsteckerbuchse durch zwei parallel und mit Abstand zueinander angeordnete, zu Anpresswülsten (13, 14; 34, 35) umgeformte Ausklinkungen gebildet ist, wobei der maximale Abstand der beiden Anpresswülste zueinander im wesentlichen der Breite eines Flachsteckers (8, 9; 32) entspricht.

5. Kabeltragvorrichtung nach Anspruch 4, **dadurch gekennzeichnet, dass** der Kontaktdruck von zwei zusammengefügten Steckverbinderteilen (8, 9, 13, 14; 32, 34, 35) aus der Materialelastizität der Anpresswülste (13, 14; 34, 35) resultiert.

6. Kabeltragvorrichtung nach einem der Ansprüche 1 bis 4, **dadurch gekennzeichnet, dass** zum Aufbringen des Kontaktdruckes von zwei zusammengefügten Steckverbinderteilen ein in einem Verbindungsabschnitt (22) einer Kabeltragvorrichtung (15') gehaltenes klammerartiges Federelement (26) vorgesehen ist.

7. Kabeltragvorrichtung nach einem der Ansprüche 1 bis 6, **dadurch gekennzeichnet, dass** zusammengesteckte Steckverbinderteile (8, 9, 13, 14) eines Steckverbinders gleichfalls einer mechanischen Fixierung zweier zusammengesetzter Kabeltragvorrichtungen (1, 1') in einer Richtung dienen, die quer zur Richtung des aufgebrachten Kontaktdruckes verläuft.

8. Kabeltragvorrichtung nach einem der Ansprüche 2 bis 7, **dadurch gekennzeichnet, dass** der eine Verbindungsabschnitt (6, 16, 30) der Kabeltragvorrichtung (1, 1'; 15, 15'; 31, 31') durch eine geringfügige, den Innenraum vergrößernde Verkröpfung der Seitenholme (2, 3; 18, 18') sowie der Bodeneinheit (4) gebildet ist, während der andere Verbindungsabschnitt (7, 7'; 22; 33) unverkröpft ist.

9. Kabeltragvorrichtung nach Anspruch 8, **dadurch gekennzeichnet, dass** die komplementären mechanischen Verbindungselemente (11, 12; 19, 20, 21, 23, 24; 36, 37, 38, 39) sowie die komplementären elektrischen Steckverbinderteile (8, 9, 10, 10'; 17, 26; 32, 34, 35) in den Verbindungsabschnitten (6, 7, 7'; 16, 22; 30, 33) zweier zu verbindender Kabeltragvorrichtungen (1, 1'; 15, 15'; 31, 31') dergestalt angeordnet sind, dass die beiden Kabeltragvorrichtungen (1, 1'; 15, 15'; 31, 31') quer zu ihrem Längsverlauf ineinander drückbar und miteinander verbindbar sind.

10. Kabeltragvorrichtung nach Anspruch 9, **dadurch gekennzeichnet, dass** es sich bei den mechanischen Verbindungselementen der Kabeltragvorrichtung (1, 1'; 15, 15'; 31, 31') um Ausnehmungen (12; 19, 20, 21; 36, 37) und ausgeprägte Laschen, Riegel (11; 23, 24; 38) oder dergleichen handelt.

## Claims

1. Cable-support device (1) made of metal with two side spars (2, 3; 18, 18') forming an edge around a cable-retaining part (5) and with a base unit (4) connecting the side spars (2, 3), said cable-support device (1, 15, 31) comprising, at its ends, a connecting section (6, 7; 16, 22; 30, 33) for connecting the cable-support device (1, 15, 31) to a further cable-support device (1', 15', 31') with one or several mechanical linking elements (11, 12; 19, 20, 21; 36, 37) and with at least one electric connector part (8, 9; 17; 32), **characterised in that** the connecting section (6, 7; 16, 22; 30, 33) is formed by a cranking of the side spars (2, 3; 18, 18') and of the base unit (4), said cranking enlarging or reducing the cross-sectional area of the cable-retaining part (5) and thereby the cable-support device (1, 15, 31), with its one end overlapping, can be connected to the connecting section (6, 7; 16, 22; 30, 33) with the complementary mechanical linking element(s) (10, 10'; 23, 24, 25; 37, 38) of the further cable-support device (1', 15', 31') without tools or screws in order to form a cable-support system, wherein the cable-support device (1, 15, 31) in the area of its connecting sections (6, 7; 16, 22; 30, 33), as a concrete part of the same, carries one or several electric plug-connector parts (8, 9; 17; 32) that can be plugged together with complementary plug-in connector parts (13, 14; 26; 34, 35) of the connecting section (7', 22, 33) of the further cable-support device (1', 15', 31') in order to create one or several plug-in connectors that electrically connect the two cable-support devices (1, 1'; 15, 15'; 31, 31') with a permanently defined electric contact surface and defined contact pressure, wherein, as electric plug-in connector parts for the creation of an electric plug-in connector, a flat connector (8, 9; 17; 32) and a flat connector socket such as a connector shoe are provided and wherein two complementary plug-in connector parts (8, 9; 17; 32) form an electric plug-in connector when two cable-support devices (1, 1') are put together.

2. Cable-support device according to claim 1, **characterised in that** the cable-support device (1, 1'; 15, 15'; 31, 31') has, at both its ends, a connecting section (6, 7; 16, 22; 30, 33) each with complementary mechanical linking elements (11, 12; 19, 20, 21, 23, 24, 25; 36, 37, 38, 39) and complementary electric plug-in connector parts (8, 9, 13, 14; 17, 26; 34, 35).

3. Cable-support device according to claim 2, **characterised in that** the plug-in connector parts (8, 9, 13, 14; 17; 32) are part of a cable-support device made of sheet metal.

4. Cable-support device according to claim 3, **characterised in that** a flat connector socket is formed by two notches converted into contact beads (13, 14; 34, 35) arranged in parallel and at a distance from each other, wherein the maximum distance of the two contact beads from each other essentially corresponds to the width of a flat connector (8, 9; 32).

5. Cable-support device according to claim 4, **characterised in that** the contact pressure of two joined plug-in connector parts (8, 9, 13, 14; 32, 34, 35) results from the material elasticity of the contact beads (13, 14; 34, 35).

6. Cable-support device according to one of the claims 1 to 4, **characterised in that**, in order to apply the contact pressure of two joined plug-in connector parts, a clamp-like spring element (26) held in a connecting section (22) of a cable-support device (15'), is provided.

7. Cable-support device according to one of the claims 1 to 6, **characterised in that** joined plug-in connector parts (8, 9, 13, 14) of a plug-in connector also serve to mechanically fix two joined cable-support devices (1, 1') in a direction that runs transversally to the direction of the contact pressure applied.

8. Cable-support device according to one of the claims 2 to 7, **characterised in that** the one connecting section (6, 16, 30) of the cable-support device (1, 1'; 15, 15'; 31, 31') is formed by a slight cranking of the side spars (2, 3; 18, 18') and of the base unit (4), said cranking enlarging the interior space, while the other connecting section (7, 7'; 22; 33) is not cranked.

9. Cable-support device according to claim 8, **characterised in that** the complementary mechanical linking elements (11, 12; 19, 20, 21, 23, 24; 36, 37, 38, 39) and the complementary electric plug-in connector parts (8, 9, 10, 10'; 17, 26; 32, 34, 35) in the connecting sections (6, 7, 7'; 16, 22; 30, 33) of two cable-support devices (1, 1'; 15, 15'; 31, 31') to be connected are arranged such that the two cable-support devices (1, 1'; 15, 15'; 31, 31') can be pressed into and connected with each other transversally to their longitudinal extension.

10. Cable-support device according to claim 9, **characterised in that** the mechanical linking elements of the cable-support device (1, 1'; 15, 15'; 31, 31') are recesses (12; 19, 20, 21; 36, 37) and distinctive lugs, bars (11; 23, 24; 38) or the like.

## Revendications

1. Dispositif porte-câble (1) en métal comportant deux longerons latéraux (2, 3 ; 18, 18') délimitant latéralement un support de câbles (5) et un fond (4) reliant les longerons latéraux (2, 3), lequel dispositif porte-câble (1, 15, 31) comprend à ses extrémités un tronçon de jonction (6, 7 ; 16, 22 ; 30, 33) afin de raccorder le dispositif porte-câble (1, 15, 31) avec un autre dispositif porte-câble (1', 15', 31') au moyen d'un ou de plusieurs éléments de raccordement (11, 12 ; 19, 20, 21 ; 36, 37) mécaniques ainsi qu'avec au moins un connecteur (8, 9 ; 17 ; 32) électrique, **caractérisé en ce que** le tronçon de jonction (6, 7 ; 16, 22 ; 30, 33) est formé par une déformation des longerons latéraux (2, 3 ; 18, 18') et du fond (4) agrandissant ou réduisant la surface de section du support de câbles (5), ce qui permet de raccorder sans outils et sans vissage le dispositif porte-câble (1, 15, 31) par l'une de ses extrémités par chevauchement sur le tronçon de jonction (6, 7 ; 16, 22 ; 30, 33) de l'élément ou des éléments de raccordement (10, 10' ; 23, 24, 25 ; 37, 38) mécaniques complémentaires de l'autre dispositif porte-câble (1', 15', 31') afin de former un système porte-câble, le dispositif porte-câble (1, 15, 31) supportant une ou plusieurs pièces de connecteur (8, 9 ; 17 ; 32) électriques enfichables au niveau de ses tronçons de jonction (6, 7 ; 16, 22 ; 30, 33) sous la forme d'une pièce constituante de ces derniers qui peuvent être interconnectés par enfichage avec des pièces de connecteur (13, 14 ; 26 ; 34, 35) enfichables complémentaires du tronçon de jonction (7', 22, 33) de l'autre dispositif porte-câble (1', 15', 31') afin de réaliser un ou plusieurs connecteurs enfichables reliant électriquement les deux dispositifs porte-câble (1, 1' ; 15, 15' ; 31, 31') au moyen d'une surface de contact électrique définie de façon permanente et d'une pression de contact définie, sachant qu'il est prévu en tant que connecteurs enfichables électriques pour réaliser un connecteur enfichable, un connecteur mâle (8, 9 ; 17 ; 32) plat et un connecteur femelle plat, par exemple un sabot connecteur, et deux pièces de connecteur enfichables (8, 9 ; 17 ; 32) complémentaires formant lors de l'assemblage de deux dispositifs porte-câble (1, 1') un connecteur électrique enfichable.

2. Dispositif porte-câble selon la revendication 1, **caractérisé en ce que** le dispositif porte-câble (1, 1' ; 15, 15' ; 31, 31') présente à ses deux extrémités un tronçon de jonction (6, 7 ; 16, 22 ; 30, 33) avec des éléments de raccordement (11, 12 ; 19, 20, 21, 23, 24, 25 ; 36, 37, 38, 39) mécaniques complémentaires et des pièces de connecteur (8, 9, 13, 14 ; 17, 26 ; 34, 35) enfichables électriques complémentaires .

3. Dispositif porte-câble selon la revendication 2, **caractérisé en ce que** les pièces de connecteurs (8, 9, 13, 14 ; 17 ; 32) enfichables sont une partie d'un dispositif porte-câble en tôle.

4. Dispositif porte-câble selon la revendication 3, **caractérisé en ce qu'**un connecteur femelle plat est formé par deux encoches parallèles, disposées à distance l'une de l'autre et transformées par moulage pour en faire des bourrelets de serrage (13, 14 ; 34, 35), l'écartement maximal entre les deux bourrelets de serrage correspondant essentiellement à la largeur d'un connecteur mâle plat (8, 9 ; 32).

5. Dispositif porte-câble selon la revendication 4, **caractérisé en ce que** la pression de contact de deux pièces de connecteur (8, 9, 13, 14 ; 32, 34, 35) assemblées résulte de l'élasticité des matériaux des bourrelets de serrage (13, 14 ; 34, 35).

6. Dispositif porte-câble selon l'une des revendications 1 à 4 **caractérisé en ce qu'**un élément ressort (26) maintenu à la manière d'une agrafe dans un tronçon de jonction (22) d'un dispositif porte-câble (15') est prévu afin d'appliquer la pression de contact sur deux pièces de connecteur enfichables assemblées.

7. Dispositif porte-câble selon l'une des revendications 1 à 6 **caractérisé en ce que** les pièces de connecteur (8, 9, 13, 14) enfichables assemblées d'un connecteur enfichable servent également à une fixation mécanique de deux dispositifs porte-câble (1, 1') assemblés dans une direction qui s'étend transversalement au sens de la pression de contact appliquée.

8. Dispositif porte-câble selon l'une des revendications 2 à 7, **caractérisé en ce que** l'un des tronçons de jonction (6, 16, 30) du dispositif porte-câble (1, 1' ; 15, 15' ; 31, 31') est formé par déformation des longerons (2, 3 ; 18, 18') ainsi que du fond (4) qui agrandit légèrement l'espace intérieur, tandis que l'autre tronçon de jonction (7, 7' ; 22 ; 33) reste non déformé.

9. Dispositif porte-câble selon la revendication 8, **caractérisé en ce que** les éléments de raccordement (11, 12 ; 19, 20, 21, 23, 24 ; 36, 37, 38, 39) mécaniques complémentaires ainsi que les pièces de connecteur (8, 9, 10, 10' ; 17, 26 ; 32, 34, 35) enfichables électriques complémentaires sont disposés dans les tronçons de jonction (6, 7, 7' ; 16, 22 ; 30, 33) de deux dispositifs porte-câble (1, 1' ; 15, 15' ; 31, 31') à assembler, de telle sorte que les deux dispositifs porte-câble (1, 1' ; 15, 15' ; 31, 31') peuvent être appuyés l'un dans l'autre et raccordés l'un avec l'autre transversalement à leur étendue longitudinale.

10. Dispositif porte-câble selon la revendication 9 **caractérisé en ce que** les éléments de raccordement mécaniques du dispositif porte-câble (1, 1' ; 15, 15' ; 31, 31') sont des évidements (12 ; 19, 20, 21 ; 36, 37) et des languettes, verrous (11 ; 23, 24 ; 38) estampés ou similaires.
